# EUROPÄISCHE PATENTANMELDUNG

(11) **EP 4 375 123 A1**
(43) Veröffentlichungstag der Anmeldung: **29.05.2024**
(21) Anmeldenummer: 23211613.7
(22) Anmeldetag: 22.11.2023
(51) Int. Cl.: B60L 53/30, B60L 53/60, B60L 53/66, G06Q 50/06

(54) **VERFAHREN ZUM BETREIBEN EINER LADESTATION FÜR ELEKTROFAHRZEUGE UND LADESTATION ZUR DURCHFÜHRUNG EINES SOLCHEN VERFAHRENS**

(30) Priorität: 24.11.2022 DE 102022131172
(71) Anmelder: ads-tec Energy GmbH, 72622 Nürtingen (DE)
(72) Erfinder: Hörfurter, Korbinian, 83257 Haag (DE)
(74) Vertreter: Kordel, Mattias

(57) **Zusammenfassung**

Die Erfindung betrifft ein Verfahren zum Betreiben einer einen digitalen Stromzähler (3) aufweisenden Ladestation (1) für Elektrofahrzeuge, wobei durch die Ladestation (1) eine momentane Uhrzeit als ein digitaler Zeitstempel (21) empfangen wird, wobei mittels der Ladestation ein Ladevorgang durchgeführt wird, wobei
- der Ladevorgang initiiert wird, wobei
- nach dem Initiieren des Ladevorgangs basierend auf dem digitalen Zeitstempel (21) eine Zähler-Uhrzeit (23) des digitalen Stromzählers (3) eingestellt wird, wobei
- eine Energieübertragung an ein Elektrofahrzeug durchgeführt wird, wobei
- ein Ladevorgang-Datensatz (25) unter Verwendung der Zähler-Uhrzeit (23) erzeugt wird, wobei
- der Ladevorgang beendet wird.

## Beschreibung

Die Erfindung betrifft ein Verfahren zum Betreiben einer Ladestation für Elektrofahrzeuge und eine Ladestation, die eingerichtet ist, um gemäß einem solchen Verfahren betrieben zu werden.

Aus der Europäischen Patentschrift EP 2 531 368 B 1 sind ein Verfahren und eine Vorrichtung zur Zuordnung einer von einer Ladestation übertragenen Energiemenge zu einem Benutzer offenbart. Um sicherzustellen, dass die übertragene Energiemenge nur für einen hierfür verantwortlichen Benutzer verwendet wird, wird zumindest ein die von einem Elektrofahrzeug von der Ladestation bezogene Energiemenge repräsentierender Stromzählerstand in der Ladestation erfasst. Weiterhin wird eine Benutzerkennung erfasst, und ein Datenpaket, umfassend zumindest den Stromzählerstand und die Benutzerkennung, wird erstellt. Zusätzlich wird eine eindeutige Beschreibung des Datenpakets erstellt, und zumindest das Datenpaket und die Beschreibung werden an das Elektrofahrzeug und/oder eine Abrechnungszentrale übermittelt. Nachteilig daran ist, dass eine eichrechtskonforme Abrechnung der übertragenen Energiemenge nicht sichergestellt werden kann.

Der Erfindung liegt daher die Aufgabe zugrunde, ein Verfahren zum Betreiben einer Ladestation für Elektrofahrzeuge und eine Ladestation, die eingerichtet ist, um gemäß einem solchen Verfahren betrieben zu werden, zu schaffen, wobei die genannten Nachteile zumindest teilweise behoben, vorzugsweise vermieden sind.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem ein Verfahren zum Betreiben einer Ladestation für Elektrofahrzeuge mit einem digitalen Stromzähler geschaffen wird. Dabei wird, insbesondere während eines Betriebes der Ladestation, eine momentane Uhrzeit als ein digitaler Zeitstempel empfangen. Weiterhin wird, insbesondere während des Betriebs der Ladestation, mittels der Ladestation ein Ladevorgang durchgeführt. Der Ladevorgang wird initiiert, wobei nach dem Initiieren des Ladevorgangs basierend auf dem digitalen Zeitstempel eine Zähler-Uhrzeit des digitalen Stromzählers eingestellt wird. Weiterhin wird, insbesondere nach dem Initiieren des Ladevorgangs, eine Energieübertragung an ein Elektrofahrzeug, welches insbesondere kabelgebunden oder drahtlos mit der Ladestation verbunden ist, durchgeführt. Weiterhin wird, insbesondere nach einem Beenden der Energieübertragung, ein Ladevorgang-Datensatz unter Verwendung der Zähler-Uhrzeit erzeugt. Anschließend wird der Ladevorgang beendet. Vorteilhafterweise ist es damit, insbesondere durch Setzen der Zähler-Uhrzeit, möglich, eine eichrechtskonforme Abrechnung einer übertragenen Energiemenge sicherzustellen. Vorteilhafterweise wird durch das Einstellen oder Setzen der Zähler-Uhrzeit, insbesondere vor Beginn der Energieübertragung, die Zähler-Uhrzeit aktualisiert, und möglicherweise vorhandene Uhrenfehler zwischen einer Erfassung einer zur Erstellung des digitalen Zeitstempels verwendeten Uhrzeit und einer Erfassung der Zähler-Uhrzeit werden zumindest vermindert, insbesondere beseitigt.

Im Kontext der vorliegenden technischen Lehre ist ein Uhrenfehler insbesondere eine Abweichung einer Uhrzeit gegenüber einer Bezugszeit. Die Abweichung kann zeitlich konstant oder zeitlich variabel - insbesondere stetig steigend oder stetig fallend - sein. Insbesondere setzt sich der Uhrenfehler aus einem Standfehler - insbesondere einem konstanten Wert - und einem Uhrgang - insbesondere einem zeitlich variablen Wert - zusammen.

In einer Ausführungsform wird die momentane Uhrzeit als der digitale Zeitstempel während oder nach dem Initiieren des Ladevorgangs empfangen. Alternativ oder zusätzlich, insbesondere zusätzlich, wird die momentane Uhrzeit als der digitale Zeitstempel vor einem Beginn der Energieübertragung empfangen.

Insbesondere wird die Zähler-Uhrzeit des digitalen Stromzählers vor der Energieübertragung eingestellt. Insbesondere wird die Zähler-Uhrzeit des digitalen Stromzählers nicht während der Energieübertragung eingestellt.

In einer Ausgestaltung wird der digitale Zeitstempel als die momentane Uhrzeit von einem Zeitserver, insbesondere einem Zeitserver der Physikalisch-Technischen Bundesanstalt in Braunschweig, erhalten.

Insbesondere wird die momentane Uhrzeit als ein signierter digitaler Zeitstempel empfangen. Damit ist es vorteilhafterweise möglich, einen Absender des digitalen Zeitstempels, insbesondere den Zeitserver der Physikalisch-Technischen Bundesanstalt in Braunschweig, zu verifizieren.

Insbesondere ist der digitale Stromzähler eingerichtet, um die während der Energieübertragung übertragenen Energiemenge zu messen. Insbesondere wird ein Anfangszählerstand des digitalen Stromzählers vor dem Beginn der Energieübertragung und ein Endzählerstand des digitalen Stromzählers nach einem Beenden der Energieübertragung erfasst, und daraus die übertragene Energiemenge bestimmt.

Insbesondere wird, insbesondere während des Betriebes der Ladestation, die momentane Uhrzeit als der digitale Zeitstempel verschlüsselt empfangen. Weiterhin wird der verschlüsselte digitale Zeitstempel vorzugsweise entschlüsselt, wodurch ein entschlüsselter digitaler Zeitstempel erhalten wird.

Insbesondere läuft die Zähler-Uhrzeit mit einer Zähleruhrzeit-Ganggeschwindigkeit unabhängig von einer Uhr des Zeitservers, insbesondere des Zeitservers der Physikalisch-Technischen Bundesanstalt in Braunschweig. Durch das Einstellen der Zähler-Uhrzeit wird somit zumindest im Regelfall insbesondere ein Sprung in dem momentanen Wert der Zähler-Uhrzeit erzeugt.

In einer Ausgestaltung wird der Ladevorgang-Datensatz mittels des digitalen Stromzählers, insbesondere von dem digitalen Stromzähler, erzeugt.

In einer Ausgestaltung wird ein QR-Code mit einem Link zu dem Ladevorgang-Datensatz erstellt und insbesondere an einen Benutzer der Ladestation übermittelt oder dem Benutzer angezeigt.

Gemäß einer Weiterbildung der Erfindung ist vorgesehen, dass basierend auf dem digitalen Zeitstempel ein Ladestation-Zeitstempel erstellt wird, wobei der Ladestation-Zeitstempel an den digitalen Stromzähler übermittelt wird. Die Zähler-Uhrzeit wird eingestellt, indem der Ladestation-Zeitstempel als ein momentaner Wert der Zähler-Uhrzeit gesetzt wird. Vorteilhafterweise ist es damit möglich, eine Ladestation-Uhrzeit anhand des digitalen Zeitstempels einzustellen und die Ladestation-Uhrzeit und die Zähler-Uhrzeit zu synchronisieren.

Insbesondere wird der Ladestation-Zeitstempel basierend auf dem entschlüsselten digitalen Zeitstempel erstellt. Weiterhin wird der Ladestation-Zeitstempel insbesondere unverschlüsselt an den digitalen Stromzähler übermittelt und als der momentane Wert der Zähler-Uhrzeit gesetzt.

In einer Ausgestaltung wird anhand des digitalen Zeitstempels eine Ladestation-Uhrzeit der Ladestation eingestellt, insbesondere indem der digitale Zeitstempel als ein momentaner Wert der Ladestation-Uhrzeit gesetzt wird. Insbesondere läuft die Ladestation-Uhrzeit mit einer Ladestationuhrzeit-Ganggeschwindigkeit unabhängig von dem digitalen Stromzähler und/oder der Zähler-Uhrzeit und insbesondere unabhängig von der Uhr des Zeitservers, insbesondere des Zeitservers der Physikalisch-Technischen Bundesanstalt in Braunschweig. Durch das Einstellen der Ladestation-Uhrzeit wird zumindest im Regelfall insbesondere ein Sprung in dem momentanen Wert der Ladestation-Uhrzeit erzeugt. Weiterhin wird anhand der Ladestation-Uhrzeit der Ladestation-Zeitstempel erstellt. Damit sind vorteilhafterweise ein Einstellen der Ladestation-Uhrzeit und das Einstellen der Zähler-Uhrzeit zeitlich voneinander entkoppelt, wobei insbesondere der Uhrenfehler zwischen einer Erfassung einer zur Erstellung des digitalen Zeitstempels verwendeten Uhrzeit und einer Erfassung der Zähler-Uhrzeit zumindest vermindert, insbesondere beseitigt, wird. Grundsätzlich kann zwischen der Einstellung der Ladestation-Uhrzeit und der Erstellung des Ladestation-Zeitstempels anhand der Ladestation-Uhrzeit eine beliebig lange Zeitdauer vergehen; der Uhrenfehler zwischen der Erfassung der Zähler-Uhrzeit und dem Zeitserver ist aber umso geringer, je kürzer die Zeitdauer zwischen der Einstellung der Ladestation-Uhrzeit und der Erstellung des Ladestation-Zeitstempels ist.

In einer alternativen Ausgestaltung wird - insbesondere unmittelbar - anhand des digitalen Zeitstempels ein Ladestation-Zeitstempel erstellt, wobei der Ladestation-Zeitstempel an den digitalen Stromzähler übermittelt wird. Die Zähler-Uhrzeit wird eingestellt, indem der Ladestation-Zeitstempel als ein momentaner Wert der Zähler-Uhrzeit gesetzt wird. Vorteilhafterweise ist es damit möglich die Zähler-Uhrzeit einzustellen ohne eine die Ladestation-Uhrzeit einzustellen.

Gemäß einer Weiterbildung der Erfindung ist vorgesehen, dass der Ladevorgang-Datensatz von dem digitalen Stromzähler digital signiert wird. Vorteilhafterweise ist es damit möglich, den Ladevorgang-Datensatz der Ladestation und insbesondere dem digitalen Stromzähler eindeutig und insbesondere fälschungssicher zuzuordnen.

In einer Ausgestaltung wird eine digitale Signatur, insbesondere als OCTET-String, insbesondere im DER-Format, in dem Ladevorgang-Datensatz gespeichert.

Im Kontext der vorliegenden technischen Lehre ist ein OCTET insbesondere eine geordnete Zusammenstellung, insbesondere ein Tupel, von acht Bit. Weiterhin ist damit ein OCTET-String ein Zeichenketten aus einer Mehrzahl an OCTETs.

Im Kontext der vorliegenden technischen Lehre ist das DER-Format insbesondere ein binäres Format für Datenstrukturen, welche in ASN.1 beschrieben werden. Dabei ist ASN.1 eine Beschreibungssprache zur Definition von Datenstrukturen sowie Festlegungen zur Umsetzung von Datenstrukturen und Elementen in ein netzeinheitliches Format.

Gemäß einer Weiterbildung der Erfindung ist vorgesehen, dass mindestens eine Uhrzeit, ausgewählt aus der Zähler-Uhrzeit und der Ladestation-Uhrzeit, spätestens eine vorbestimmte Toleranzzeitdauer nach dem Empfang der momentanen Uhrzeit als dem digitalen Zeitstempel oder nach dem Erstellen des Ladestation-Zeitstempels eingestellt wird. Somit wird vorteilhafterweise gewährleistet, dass die Zähler-Uhrzeit bis auf die vorbestimmte Toleranzzeitdauer insbesondere in Bezug auf den digitalen Zeitstempel genau eingestellt ist.

In einer Ausgestaltung - insbesondere, wenn anhand des digitalen Zeitstempels die Ladestation-Uhrzeit eingestellt und anhand der Ladestation-Uhrzeit der Ladestation-Zeitstempel erstellt wird - wird die Zähler-Uhrzeit spätestens eine erste vorbestimmte Toleranzzeitdauer nach dem Empfang der momentanen Uhrzeit als dem digitalen Zeitstempel eingestellt. Alternativ oder zusätzlich wird die Zähler-Uhrzeit spätestens eine zweite vorbestimmte Toleranzzeitdauer nach dem Erstellen des Ladestation-Zeitstempels eingestellt, insbesondere indem der Ladestation-Zeitstempel als ein momentaner Wert der Zähler-Uhrzeit gesetzt wird. Alternativ oder zusätzlich wird die Ladestation-Uhrzeit spätestens eine dritte vorbestimmte Toleranzzeitdauer nach dem Empfang der momentanen Uhrzeit als dem digitalen Zeitstempel eingestellt.

In einer alternativen Ausgestaltung - insbesondere, wenn der Ladestation-Zeitstempel unmittelbar anhand des digitalen Zeitstempels erstellt wird - wird der Ladestation-Zeitstempel spätestens die vorbestimmte Toleranzzeitdauer nach dem Empfang der momentanen Uhrzeit als dem digitalen Zeitstempel als der momentane Wert der Zähler-Uhrzeit gesetzt.

Gemäß einer Weiterbildung der Erfindung ist vorgesehen, dass als die vorbestimmte Toleranzzeitdauer 5 Sekunden, vorzugsweise 4 Sekunden, vorzugsweise 3 Sekunden, vorzugsweise 2 Sekunden, vorzugsweise 1 Sekunde, besonders bevorzugt 0,5 Sekunden, verwendet wird.

Insbesondere wird als mindestens eine Toleranzzeitdauer, ausgewählt aus der ersten vorbestimmten Toleranzzeitdauer, der zweiten vorbestimmten Toleranzzeitdauer, und der dritten vorbestimmten Toleranzzeitdauer, 5 Sekunden, vorzugsweise 4 Sekunden, vorzugsweise 3 Sekunden, vorzugsweise 2 Sekunden, vorzugsweise 1 Sekunde, besonders bevorzugt 0,5 Sekunden, verwendet. Besonders bevorzugt werden als die zweite vorbestimmte Toleranzzeitdauer und die dritte vorbestimmte Toleranzzeitdauer jeweils 5 Sekunden, vorzugsweise 4 Sekunden, vorzugsweise 3 Sekunden, vorzugsweise 2 Sekunden, vorzugsweise 1 Sekunde, besonders bevorzugt 0,5 Sekunden, verwendet.

Gemäß einer Weiterbildung der Erfindung ist vorgesehen, dass basierend auf dem digitalen Zeitstempel die Zähler-Uhrzeit des digitalen Stromzählers eingestellt wird, bevor die Energieübertragung gestartet wird. Alternativ oder zusätzlich wird die Energieübertragung erst freigeschaltet, wenn basierend auf dem digitalen Zeitstempel die Zähler-Uhrzeit eingestellt wurde. Vorteilhafterweise wird damit gewährleistet, dass die Zähler-Uhrzeit nicht während der Energieübertragung eingestellt wird und damit eine fehlerhafte Zähler-Uhrzeit für den Ladevorgang-Datensatz verwendet wird.

Insbesondere wird die Energieübertragung erst freigeschaltet, wenn der Ladestation-Zeitstempel als der momentane Wert der Zähler-Uhrzeit gesetzt wurde.

Gemäß einer Weiterbildung der Erfindung ist vorgesehen, dass während des Initiierens des Ladevorgangs ein Benutzer der Ladestation erkannt wird, wobei eine eindeutige Benutzerkennung erfasst und die eindeutige Benutzerkennung an den digitalen Stromzähler übermittelt wird.

Gemäß einer Weiterbildung der Erfindung ist vorgesehen, dass während des Initiierens des Ladevorgangs ein Ladepunkt der Ladestation ausgewählt wird.

Insbesondere wird der Ladepunkt der Ladestation ausgewählt, bevor der Benutzer der Ladestation erkannt wird.

Insbesondere wird der Ladepunkt der Ladestation von dem Benutzer, insbesondere mittels einer Bedienvorrichtung, ausgewählt.

Gemäß einer Weiterbildung der Erfindung ist vorgesehen, dass während des Initiierens des Ladevorgangs eine Bezahlart ausgewählt wird.

Insbesondere wird die Bezahlart ausgewählt, bevor der Benutzer der Ladestation erkannt wird.

Insbesondere wird die Bezahlart von dem Benutzer, insbesondere mittels einer Bedienvorrichtung, ausgewählt.

Gemäß einer Weiterbildung der Erfindung ist vorgesehen, dass der Benutzer der Ladestation während des Initiierens des Ladevorgangs anhand eines RFID-Chips erkannt wird. Alternativ oder zusätzlich wird der Benutzer der Ladestation anhand einer Kreditkarte erkannt. Alternativ oder zusätzlich wird der Benutzer der Ladestation anhand eines Smartphones erkannt. Alternativ oder zusätzlich wird der Benutzer der Ladestation anhand einer Ladekarte erkannt. Alternativ oder zusätzlich wird der Benutzer der Ladestation anhand einer digitalen Leistungsempfängerkennung erkannt.

In einer Ausgestaltung wird der Benutzer der Ladestation anhand des RFID-Chips erkannt. Dabei wird eine Identifikationsnummer des RFID-Chips als die eindeutige Benutzerkennung verwendet.

In einer alternativen Ausgestaltung, insbesondere bei einem Ad-hoc-Ladevorgang, wird der Benutzer der Ladestation anhand der Kreditkarte erkannt. Dabei wird eine System Trace Audit Number - eine sogenannte STAN - in Kombination mit einer Identifikationsnummer der Ladestation, insbesondere einer Identifikationsnummer eines Zahlungsmoduls der Ladestation, als die eindeutige Benutzerkennung verwendet.

In einer alternativen Ausgestaltung wird der Benutzer der Ladestation anhand des Smartphones, insbesondere über eine Smartphone-Applikation, erkannt. Dabei wird die eindeutige Benutzerkennung insbesondere von einem Rechenzentrum, insbesondere einem Ladestation-Rechenzentrum oder einem Fremdbetreiber-Rechenzentrum, oder direkt von dem Smartphone an die Ladestation übermittelt.

Insbesondere ist in einer Ausführungsform die eindeutige Benutzerkennung in dem Smartphone, insbesondere in der Smartphone-Applikation, hinterlegt und wird zur Erkennung des Benutzers von der Ladestation empfangen. Alternativ wird die eindeutige Benutzerkennung in dem Smartphone, insbesondere in der Smartphone-Applikation, insbesondere ad hoc erzeugt und wird zur Erkennung des Benutzers von der Ladestation empfangen.

Im Kontext der vorliegenden technischen Lehre ist ein Ladestation-Rechenzentrum insbesondere ein Rechenzentrum eines Betreibers der Ladestation. Insbesondere erfolgt über das Ladestation-Rechenzentrum eine Freigabe des Ladevorgangs, eine Freigabe der Energieübertragung, eine Abrechnung und Dokumentation der Ladevorgänge, und eine Wartung der Ladestation.

Im Kontext der vorliegenden technischen Lehre ist ein Fremdbetreiber-Rechenzentrum insbesondere ein Rechenzentrum eines von dem Betreiber der Ladestation verschiedenen Fremdbetreibers. Insbesondere erfolgt über das Fremdbetreiber-Rechenzentrum eine Übermittlung der eindeutigen Benutzerkennung an die Ladestation.

In einer alternativen Ausgestaltung, insbesondere bei einem Plug-and-Charge-Ladevorgang, wird der Benutzer der Ladestation anhand der digitalen Leistungsempfängerkennung erkannt. Dabei wird die digitale Leistungsempfängerkennung als die eindeutige Benutzerkennung genutzt. Insbesondere ist die digitale Leistungsempfängerkennung in dem Elektrofahrzeug hinterlegt und wird an die Ladestation übermittelt. Insbesondere wird die digitale Leistungsempfängererkennung über ein Ladekabel an die Ladestation übermittelt, wenn das Ladekabel an das Elektrofahrzeug angeschlossen ist.

Gemäß einer Weiterbildung der Erfindung ist vorgesehen, dass während des Initiierens des Ladevorgangs, die eindeutige Benutzerkennung an das Ladestation-Rechenzentrum übermittelt wird, wobei das Ladestation-Rechenzentrum basierend auf der eindeutigen Benutzerkennung die Energieübertragung an der Ladestation freigibt.

Gemäß einer Weiterbildung der Erfindung ist vorgesehen, dass der Ladevorgang-Datensatz mindestens eine Information umfasst, die ausgewählt ist aus einer Gruppe, bestehend aus: Der eindeutigen Benutzerkennung, einer von der Ladestation abgegebenen, insbesondere an das Elektrofahrzeug übertragenen Energiemenge, einer Startzeit und einer Zeitdauer des Ladevorgangs, der Startzeit und einer Endzeit des Ladevorgangs, einer eindeutigen Stromzählerkennung des digitalen Stromzählers, und einer Kombination von wenigstens zwei dieser Informationen.

Vorzugsweise wird der Ladevorgang-Datensatz als OCMF-Datei erzeugt.

Im Kontext der vorliegenden technischen Lehre ist eine OCMF-Datei eine Datei, die mindestens ein den Ladevorgang charakterisierendes Ereignis oder Merkmal, insbesondere eine Mehrzahl an den Ladevorgang charakterisierenden Merkmalen im Open Charge Metering Format (OCMF) digital festhält.

In einer Ausgestaltung weist die OCMF-Datei Informationen zu dem digitalen Stromzähler, Meta-Informationen zu der Energieübertragung, Informationen zu einem Start der Energieübertragung, Informationen zu einem Ende der Energieübertragung, Informationen zu der Signatur, und die Signatur auf.

Insbesondere weisen die Informationen zu dem digitalen Stromzähler eine OCMF-Format-Version, einen Gerätetyp, die eindeutige Stromzählerkennung, insbesondere eine Seriennummer, eine Geräteversion, eine Herstellerbezeichnung, und eine Firmwareversion auf.

Insbesondere weisen die Meta-Informationen zu der Energieübertragung eine Information, ob die eindeutige Benutzerkennung ermittelt wurde, einen Vertrauensstatus der eindeutigen Benutzerkennung, eine Art einer Ermittlung der eindeutigen Benutzerkennung, eine Information zur Beschaffenheit und/oder Herkunft der eindeutigen Benutzerkennung, die eindeutige Benutzerkennung, eine Art einer Kodierung einer Kennung der Ladestation, insbesondere eines Ladepunkts der Ladestation, und eine Ladeinfrastruktur-Kennung der Ladestation, insbesondere des Ladepunkts, auf.

Insbesondere weisen die Informationen zum Start und zum Ende der Energieübertragung einen Zeitstempel, eine Information über Start oder Ende der Energieübertragung, einen Zählerstand des digitalen Stromzählers, eine Interpretation des Zählerstands, eine Einheit des digitalen Stromzählers, eine Art des Stroms, insbesondere Gleichstrom oder Wechselstrom, Informationen über eine Fehlermeldung, und einen Status der Energieübertragung, auf.

Im Kontext der vorliegenden Lehre umfasst die Interpretation des Zählerstands insbesondere eine Information, ob der Zählerstand als zeitlich lokaler oder zeitlich globaler Zählerstand in dem Ladevorgang-Datensatz gespeichert wird. Insbesondere ist ein zeitlich globaler Zählerstand ein Zählerstand, der seit der Herstellung des digitalen Stromzählers fortlaufend eine Energiemenge zählt. Ein zeitlich lokaler Zählerstand ist insbesondere ein Zählerstand, der zu Beginn des Ladevorgangs auf einen vorbestimmten Zählerwert, insbesondere Null, gesetzt wird.

Insbesondere weisen die Informationen zur Signatur eine Information über ein kryptographisches Verfahren der Signatur auf.

Gemäß einer Weiterbildung der Erfindung ist vorgesehen, dass der insbesondere signierte Ladevorgang-Datensatz an das Ladestation-Rechenzentrum übermittelt wird.

Insbesondere wird der insbesondere signierte Ladevorgang-Datensatz in dem Ladestation-Rechenzentrum gespeichert.

In einer Ausgestaltung, insbesondere bei einem Ad-hoc-Ladevorgang, wird der insbesondere signierte Ladevorgang-Datensatz dem Benutzer in einer Kontoübersicht und/oder Kreditkartenabrechnung übermittelt.

Gemäß einer Weiterbildung der Erfindung ist vorgesehen, dass unmittelbar nach einem Anschalten der Ladestation ein Startvorgang durchgeführt wird. Während des Startvorgangs wird durch die Ladestation die momentane Uhrzeit als der digitale Zeitstempel empfangen. Weiterhin wird basierend auf dem digitalen Zeitstempel die Zähler-Uhrzeit eingestellt.

In einer Ausgestaltung wird während des Startvorgangs anhand des digitalen Zeitstempels die Ladestation-Uhrzeit der Ladestation eingestellt, insbesondere indem der digitale Zeitstempel als ein momentaner Wert der Ladestation-Uhrzeit gesetzt wird. Durch das Einstellen der Ladestation-Uhrzeit wird zumindest im Regelfall insbesondere ein Sprung in dem momentanen Wert der Ladestation-Uhrzeit erzeugt. Weiterhin wird anhand der Ladestation-Uhrzeit der Ladestation-Zeitstempel erstellt, wobei der Ladestation-Zeitstempel an den digitalen Stromzähler übermittelt wird. Anschließend wird die Zähler-Uhrzeit eingestellt, indem der Ladestation-Zeitstempel als ein momentaner Wert der Zähler-Uhrzeit gesetzt wird.

In einer alternativen Ausgestaltung wird während des Startvorgangs - insbesondere unmittelbar-anhand des digitalen Zeitstempels der Ladestation-Zeitstempel erstellt, wobei der Ladestation-Zeitstempel an den digitalen Stromzähler übermittelt wird. Anschließend wird die Zähler-Uhrzeit eingestellt, indem der Ladestation-Zeitstempel als ein momentaner Wert der Zähler-Uhrzeit gesetzt wird.

Insbesondere wird die Zähler-Uhrzeit spätestens die erste vorbestimmte Toleranzzeitdauer nach dem Empfang der momentanen Uhrzeit als dem digitalen Zeitstempel eingestellt. Alternativ oder zusätzlich wird die Zähler-Uhrzeit spätestens die zweite vorbestimmte Toleranzzeitdauer nach dem Erstellen des Ladestation-Zeitstempels eingestellt, insbesondere indem der Ladestation-Zeitstempel als ein momentaner Wert der Zähler-Uhrzeit gesetzt wird. Alternativ oder zusätzlich wird die Ladestation-Uhrzeit spätestens die dritte vorbestimmte Toleranzzeitdauer nach dem Empfang der momentanen Uhrzeit als dem digitalen Zeitstempel eingestellt.

In einer Ausgestaltung wird bei dem Startvorgang zunächst ein Startprogramm, insbesondere ein Bootloader, vorzugsweise das Programm U-Boot, ausgeführt. Anschließend wird ein Betriebssystem der Ladestation, insbesondere eine Linux-Distribution, vorzugsweise OpenWRT, gestartet. Anschließend wird durch die Ladestation die momentane Uhrzeit als der digitale Zeitstempel empfangen und die Ladestation-Uhrzeit wird anhand des digitalen Zeitstempels eingestellt. Weiterhin wird ein Steuerprogramm der Ladestation gestartet. Danach wird der Ladestation-Zeitstempel als ein momentaner Wert der Zähler-Uhrzeit gesetzt, und die Ladestation wird freigegeben, sodass ein Benutzer mit der Ladestation interagieren kann und ein Ladevorgang durchgeführt werden kann. Zusätzlich wird vorzugsweise nach dem Start des Steuerprogramms der Ladestation geprüft, ob in dem digitalen Stromzähler - im Fehlerfall der Ladestation - ein Ladevorgang noch nicht beendet wurde, insbesondere noch aktiv ist. Falls nein, wird die Zähler-Uhrzeit eingestellt. Falls ja, wird für den noch nicht beendeten Ladevorgang der Ladevorgang-Datensatz unter Verwendung der noch nicht neu eingestellten Zähler-Uhrzeit erzeugt, der Ladevorgang wird beendet und anschließend die Zähler-Uhrzeit eingestellt.

Gemäß einer Weiterbildung der Erfindung ist vorgesehen, dass ein Aktualisierungsvorgang durchgeführt wird, wenn seit einem vorhergehenden Einstellen der Zähler-Uhrzeit mindestens 24 Stunden, vorzugsweise mindestens 12 Stunden, vorzugsweise mindestens 10 Stunden, vorzugsweise mindestens 5 Stunden, vorzugsweise mindestens 2 Stunden, vorzugsweise mindestens 1 Stunde, vergangen sind. Während des Aktualisierungsvorgangs durch die Ladestation wird die momentane Uhrzeit als der digitale Zeitstempel empfangen. Weiterhin wird basierend auf dem digitalen Zeitstempel die Zähler-Uhrzeit eingestellt.

In einer Ausgestaltung wird während des Aktualisierungsvorgangs anhand des digitalen Zeitstempels die Ladestation-Uhrzeit der Ladestation eingestellt, insbesondere indem der digitale Zeitstempel als ein momentaner Wert der Ladestation-Uhrzeit gesetzt wird. Durch das Einstellen der Ladestation-Uhrzeit wird zumindest im Regelfall insbesondere ein Sprung in dem momentanen Wert der Ladestation-Uhrzeit erzeugt. Weiterhin wird anhand der Ladestation-Uhrzeit der Ladestation-Zeitstempel erstellt, wobei der Ladestation-Zeitstempel an den digitalen Stromzähler übermittelt wird. Anschließend wird die Zähler-Uhrzeit eingestellt, indem der Ladestation-Zeitstempel als ein momentaner Wert der Zähler-Uhrzeit gesetzt wird.

In einer alternativen Ausgestaltung wird während des Aktualisierungsvorgangs anhand des digitalen Zeitstempels der Ladestation-Zeitstempel erstellt, wobei der Ladestation-Zeitstempel an den digitalen Stromzähler übermittelt wird. Anschließend wird die Zähler-Uhrzeit eingestellt, indem der Ladestation-Zeitstempel als ein momentaner Wert der Zähler-Uhrzeit gesetzt wird.

Insbesondere wird die Zähler-Uhrzeit spätestens die erste vorbestimmte Toleranzzeitdauer nach dem Empfang der momentanen Uhrzeit als dem digitalen Zeitstempel eingestellt. Alternativ oder zusätzlich wird die Zähler-Uhrzeit spätestens die zweite vorbestimmte Toleranzzeitdauer nach dem Erstellen des Ladestation-Zeitstempels eingestellt, insbesondere indem der Ladestation-Zeitstempel als ein momentaner Wert der Zähler-Uhrzeit gesetzt wird. Alternativ oder zusätzlich wird die Ladestation-Uhrzeit spätestens die dritte vorbestimmte Toleranzzeitdauer nach dem Empfang der momentanen Uhrzeit als dem digitalen Zeitstempel eingestellt.

Vorzugsweise wird der Aktualisierungsvorgang nicht durchgeführt, wenn zeitgleich ein Ladevorgang durchgeführt wird. Insbesondere werden der Aktualisierungsvorgang und der Ladevorgang nicht zeitgleich durchgeführt. Insbesondere wird die Durchführung des Aktualisierungsvorgangs blockiert, wenn der Ladevorgang durchgeführt wird. Insbesondere ist es während der Durchführung des Ladevorgangs nicht möglich, den Aktualisierungsvorgang durchzuführen.

In einer Ausgestaltung kann der Ladevorgang nur dann gestartet werden, wenn das letzte Einstellen der Zähler-Uhrzeit nicht länger als 24 Stunden zurückliegt. Vorteilhafterweise stellt der Aktualisierungsvorgang damit sicher, dass die Zähler-Uhrzeit mindestens alle 24 Stunden neu gesetzt wird und somit jederzeit ein Ladevorgang gestartet werden kann.

Die Aufgabe wird auch gelöst, indem eine Ladestation mit einem digitalen Stromzähler geschaffen wird. Dabei ist die Ladestation eingerichtet, um gemäß einem erfindungsgemäßen Verfahren oder gemäß einem Verfahren nach einer oder mehreren der zuvor erläuterten Ausführungsformen betrieben zu werden. In Zusammenhang mit der Ladestation ergeben sich insbesondere die Vorteile, die bereits in Zusammenhang mit dem Verfahren zum Betreiben der Ladestation erläutert wurden.

In einer Ausgestaltung weist die Ladestation eine Bedienvorrichtung mit einer Anzeigeeinrichtung und einer RFID-Lesevorrichtung auf. Die Anzeigeeinrichtung ist insbesondere zur Benutzerführung eingerichtet, wobei Handlungsanweisungen an einen Benutzer der Ladestation auf der Anzeigeeinrichtung angezeigt werden. Zusätzlich ist die Anzeigeeinrichtung vorzugsweise eingerichtet, um einen QR-Code mit einem Link zu einem Ladevorgang-Datensatz anzuzeigen.

Die RFID-Lesevorrichtung ist insbesondere eingerichtet zum Auslesen eines RFID-Chips, sodass mittels der RFID-Lesevorrichtung der Benutzer der Ladestation anhand des RFID-Chips erkannt werden kann. Alternativ oder zusätzlich weist die Ladestation ein Kommunikationsmodul auf, wobei das Kommunikationsmodul vorzugsweise als Firewall-Router-Einrichtung ausgebildet ist. Das Kommunikationsmodul ist insbesondere eingerichtet, um während eines Betriebes der Ladestation eine momentane Uhrzeit als einen insbesondere verschlüsselten digitalen Zeitstempel zu empfangen, und/oder eine eindeutige Benutzerkennung an ein Ladestation-Rechenzentrum zu übermitteln, und/oder eine Freigabe einer Energieübertragung von dem Ladestation-Rechenzentrum insbesondere basierend auf der eindeutigen Benutzerkennung zu empfangen, und/oder den Ladevorgang-Datensatz an das Ladestation-Rechenzentrum zu übermitteln. Alternativ oder zusätzlich weist die Ladestation ein Zahlungsmodul auf, wobei das Zahlungsmodul insbesondere eingerichtet ist zum Auslesen einer Kreditkarte, sodass mittels des Zahlungsmoduls der Benutzer der Ladestation anhand der Kreditkarte erkannt werden kann, um insbesondere einen sogenannten Ad-hoc-Ladevorgang durchzuführen.

Als Ladestation wird in der Elektrotechnik jedwede, insbesondere stationäre oder mobile, Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos-zwangsläufig entnehmen zu müssen. Ladestationen für Elektroautos werden mitunter auch als "Stromtankstellen" bezeichnet und können mehrere Ladepunkte umfassen. Bekannt sind hier insbesondere Gleichstrom-Schnellladesysteme (high performance charging systems oder high power charging systems, HPC-Systeme) wie das in Europa verbreitete, sogenannte kombinierte Ladesystem (combined charging system, CCS). Beim gattungsmäßigen Gleichstromladen wird Gleichstrom aus der Ladestation direkt in die Batterie des Fahrzeugs eingespeist und hierzu durch einen leistungsstarken Gleichrichter, bevorzugt der Ladestation, vom Stromnetz oder durch große Pufferakkumulatoren an z.B. Solartankstellen bereitgestellt. Im Fahrzeug befindet sich ein Batteriemanagementsystem, das mit der Ladestation direkt oder indirekt kommuniziert, um die Stromstärke und -spannung anzupassen oder bei Erreichung einer vorbestimmten Kapazitätsgrenze den Vorgang zu beenden. Eine Leistungselektronik befindet sich hierbei üblicherweise in der Ladestation. Da die Gleichstromanschlüsse der Ladestation direkt - ohne Umweg über einen AC/DC-Wandler des Fahrzeugs - mit entsprechenden Anschlüssen der Traktionsbatterie verbunden werden, lassen sich verlustarm hohe Ladeströme übertragen, was kurze Ladezeiten ermöglicht.

In einer Ausführungsform ist die Ladestation als eine Ladesäule ausgebildet. Insbesondere weist die Ladestation mindestens einen Ladepunkt, insbesondere genau einen Ladepunkt oder genau zwei Ladepunkte, auf. Insbesondere ist jedem Ladepunkt ein digitaler Stromzähler zugeordnet.

Insbesondere ist die Ladestation als Schnellladestation ausgebildet. In einer Ausführungsform ist die Ladestation als batteriegestützte Ladestation, insbesondere als batteriegestützte Schnellladestation, ausgebildet.

Die Erfindung wird im Folgenden anhand der Zeichnung näher erläutert. Dabei zeigen:
- Fig. 1: eine schematische Darstellung eines ersten Ausführungsbeispiels einer Ladestation,
- Fig. 2: eine schematische Darstellung eines zweiten Ausführungsbeispiels der Ladestation,
- Fig. 3: ein Flussdiagramm eines ersten Ausführungsbeispiels eines Verfahrens zum Betreiben der Ladestation,
- Fig. 4: ein Flussdiagramm eines zweiten Ausführungsbeispiels des Verfahrens zum Betreiben der Ladestation,
- Fig. 5: ein Flussdiagramm eines dritten Ausführungsbeispiels des Verfahrens zum Betreiben der Ladestation, und
- Fig. 6: ein Flussdiagramm eines vierten Ausführungsbeispiels des Verfahrens zum Betreiben der Ladestation.

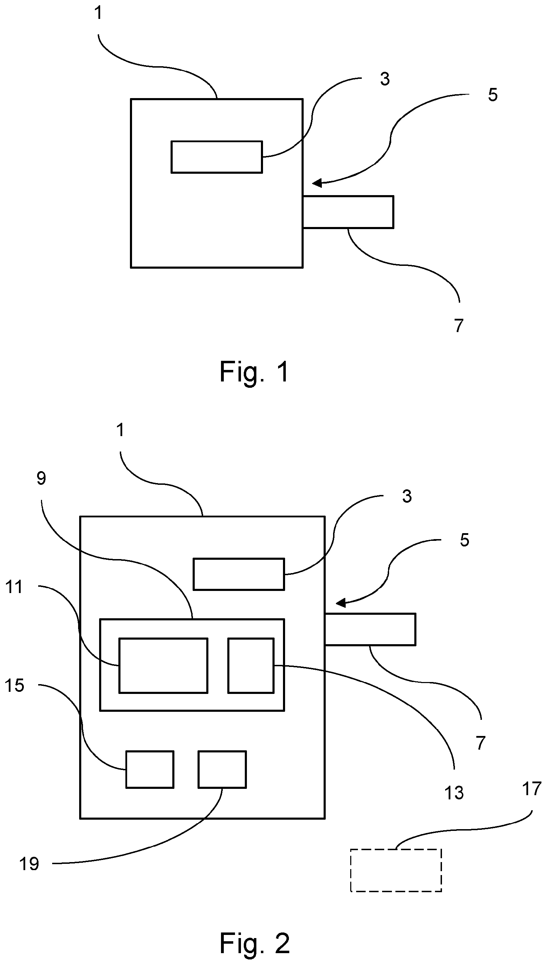

**Figur** 1 zeigt eine schematische Darstellung eines ersten Ausführungsbeispiels einer Ladestation 1 mit einem digitalen Stromzähler 3. Die Ladestation 1 weist außerdem einen Ladepunkt 5 mit einem Ladekabel 7 auf. Insbesondere ist der digitale Stromzähler 3 dem Ladepunkt 5 und damit auch dem Ladekabel 7 zugeordnet, sodass mittels des digitalen Stromzählers 3 eine mittels des Ladepunkts 5 übertragene Energiemenge gemessen werden kann.

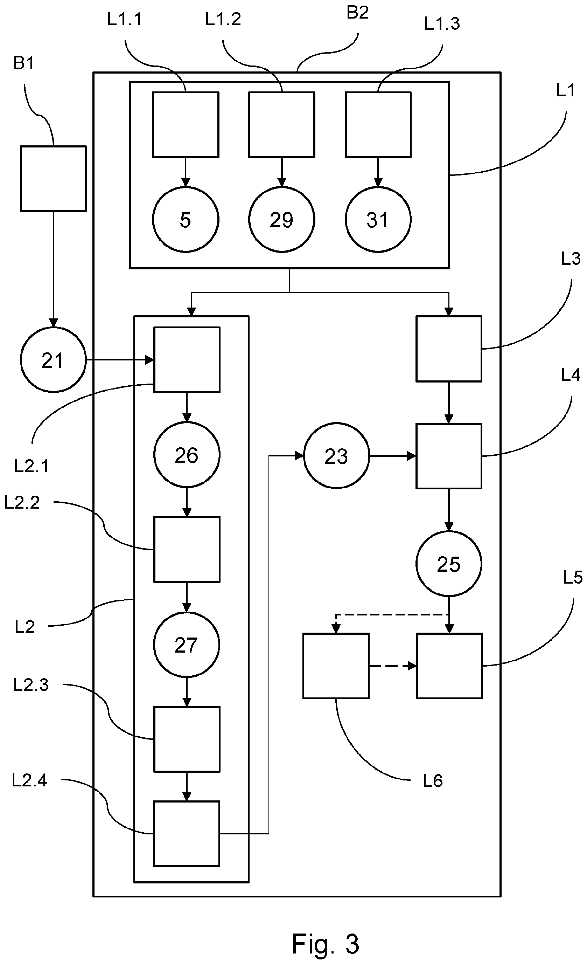

Insbesondere ist die Ladestation 1 eingerichtet, um mittels eines Verfahrens zum Betreiben der Ladestation 1 betrieben zu werden. Ausführungsbeispiele des Verfahrens zum Betreiben der Ladestation 1 werden anhand der Figuren 3 bis 6 detailliert erläutert.

**Figur** 2 zeigt eine schematische Darstellung eines zweiten Ausführungsbeispiels der Ladestation 1 mit dem digitalen Stromzähler 3.

Gleiche und funktionsgleiche Elemente sind in allen Figuren mit denselben Bezugszeichen versehen, sodass insofern auf die vorangegangene Beschreibung verwiesen wird.

Die Ladestation 1 weist zusätzlich eine Bedienvorrichtung 9 mit einer Anzeigeeinrichtung 11 und einer RFID-Lesevorrichtung 13 auf. Die Anzeigeeinrichtung 11 ist insbesondere zur Benutzerführung eingerichtet, wobei Handlungsanweisungen an einen Benutzer der Ladestation 1 auf der Anzeigeeinrichtung 11 angezeigt werden. Zusätzlich ist die Anzeigeeinrichtung 11 vorzugsweise eingerichtet, um einen QR-Code mit einem Link zu einem Ladevorgang-Datensatz 25 anzuzeigen. Die RFID-Lesevorrichtung 13 ist insbesondere eingerichtet zum Auslesen eines RFID-Chips, sodass mittels der RFID-Lesevorrichtung 13 der Benutzer der Ladestation 1 anhand des RFID-Chips erkannt wird. Weiterhin weist die Ladestation 1 ein Kommunikationsmodul 15 auf, wobei das Kommunikationsmodul 15 vorzugsweise als Firewall-Router-Einrichtung ausgebildet ist. Das Kommunikationsmodul 15 ist insbesondere eingerichtet, um während eines Betriebes der Ladestation 1 eine momentane Uhrzeit als einen insbesondere verschlüsselten digitalen Zeitstempel 21 zu empfangen, und/oder eine eindeutige Benutzerkennung 31 an ein Ladestation-Rechenzentrum 17 zu übermitteln, und/oder eine Freigabe einer Energieübertragung von dem Ladestation-Rechenzentrum 17 insbesondere basierend auf der eindeutigen Benutzerkennung 31 zu empfangen, und/oder einen Ladevorgang-Datensatz 25 an das Ladestation-Rechenzentrum 17 zu übermitteln. Alternativ oder zusätzlich weist die Ladestation 1 ein Zahlungsmodul 19 auf, wobei das Zahlungsmodul 19 insbesondere eingerichtet ist zum Auslesen einer Kreditkarte, sodass mittels des Zahlungsmoduls 19 der Benutzer der Ladestation 1 anhand der Kreditkarte erkannt wird, um insbesondere einen sogenannten Ad-hoc-Ladevorgang durchzuführen.

Insbesondere sind der digitale Stromzähler 3, die Bedienvorrichtung 9, insbesondere die Anzeigeeinrichtung 11 und die RFID-Lesevorrichtung 13, das Kommunikationsmodul 15 und das Zahlungsmodul 19 in hier nicht explizit dargestellter Weise miteinander wirkverbunden.

Insbesondere ist die Ladestation 1 eingerichtet, um mittels eines Verfahrens zum Betreiben der Ladestation 1 betrieben zu werden. Ausführungsbeispiele des Verfahrens zum Betreiben der Ladestation 1 werden anhand der Figuren 3 bis 6 detailliert erläutert.

**Figur** 3 zeigt ein Flussdiagramm eines Ausführungsbeispiels eines Verfahrens zum Betreiben der Ladestation 1.

In einem ersten Betriebsschritt B1 wird durch die Ladestation 1 eine momentane Uhrzeit als ein digitaler Zeitstempel 21 empfangen. Insbesondere wird die momentane Uhrzeit als ein digitaler Zeitstempel 21 verschlüsselt empfangen. Besonders bevorzugt wird die momentane Uhrzeit als ein signierter digitaler Zeitstempel 21 empfangen.

In einem zweiten Betriebsschritt B2 wird mittels der Ladestation 1 ein Ladevorgang durchgeführt.

Während des zweiten Betriebsschritts B2 wird in einem ersten Ladeschritt L1 der Ladevorgang initiiert.

Vorzugsweise wird in einem ersten ersten Ladeschritt L1. 1 der Ladepunkt 5 der Ladestation 1 ausgewählt, insbesondere von einem Benutzer, insbesondere mittels der Bedienvorrichtung 9.

Vorzugsweise wird in einem zweiten ersten Ladeschritt L1.2 eine Bezahlart 29 ausgewählt, insbesondere von dem Benutzer, insbesondere mittels der Bedienvorrichtung 9.

Vorzugsweise wird in einem dritten ersten Ladeschritt L1.3 der Benutzer der Ladestation 1 erkannt, wobei eine eindeutige Benutzerkennung 31 erfasst wird, wobei die eindeutige Benutzerkennung 31 an den digitalen Stromzähler 3 übermittelt wird.

Zusätzlich wird besonders bevorzugt in dem dritten ersten Ladeschritt L1.3 die eindeutige Benutzerkennung 31 an das Ladestation-Rechenzentrum 17 übermittelt, wobei das Ladestation-Rechenzentrum 17 basierend auf der eindeutigen Benutzerkennung 31 die Energieübertragung an der Ladestation 1 freigibt.

Vorzugsweise wird in dem dritten ersten Ladeschritt L1.3 der Benutzer der Ladestation 1 anhand des RFID-Chips, und/oder der Kreditkarte, und/oder eines Smartphones, und/oder einer Ladekarte, und/oder einer digitalen Leistungsempfängerkennung erkannt.

Weiterhin wird in einem zweiten Ladeschritt L2 nach dem Initiieren des Ladevorgangs basierend auf dem digitalen Zeitstempel 21 die Zähler-Uhrzeit 23 eingestellt.

Vorzugsweise wird in einem ersten zweiten Ladeschritt L2.1 anhand des digitalen Zeitstempels 21 eine Ladestation-Uhrzeit 26 eingestellt, insbesondere indem der digitale Zeitstempel 21 als ein momentaner Wert der Ladestation-Uhrzeit 26 gesetzt wird. Weiter wird in einem zweiten zweiten Ladeschritt L2.2 anhand der Ladestation-Uhrzeit 26 ein Ladestation-Zeitstempel 27 erstellt. Weiter wird in einem dritten zweiten Ladeschritt L2.3 der Ladestation-Zeitstempel 27 an den digitalen Stromzähler 3 übermittelt. Anschließend wird in einem vierten zweiten Ladeschritt L2.4 die Zähler-Uhrzeit 23 eingestellt, indem der Ladestation-Zeitstempel 27 als ein momentaner Wert der Zähler-Uhrzeit 23 gesetzt wird. Vorzugsweise wird der erste zweite Ladeschritt L2.1 spätestens eine dritte vorbestimmte Toleranzzeitdauer nach dem ersten Betriebsschritt B1 durchgeführt. Besonders bevorzugt wird der vierte zweite Ladeschritt L2.4 spätestens eine zweite vorbestimmte Toleranzzeitdauer nach dem zweiten zweiten Ladeschritt L2.2 durchgeführt. Insbesondere wird als die zweite vorbestimmte Toleranzzeitdauer und/oder die dritte vorbestimmte Toleranzzeitdauer 5 Sekunden, vorzugsweise 4 Sekunden, vorzugsweise 3 Sekunden, vorzugsweise 2 Sekunden, vorzugsweise 1 Sekunde, besonders bevorzugt 0,5 Sekunden, verwendet.

Insbesondere wird der vierte zweite Ladeschritt L2.4 spätestens eine erste vorbestimmte Toleranzzeitdauer nach dem ersten Betriebsschritt B1 durchgeführt. Insbesondere wird als die erste vorbestimmte Toleranzzeitdauer 5 Sekunden, vorzugsweise 4 Sekunden, vorzugsweise 3 Sekunden, vorzugsweise 2 Sekunden, vorzugsweise 1 Sekunde, besonders bevorzugt 0,5 Sekunden, verwendet. Insbesondere ist damit die erste Toleranzzeitdauer mindestens so lange wie die Summe aus der zweiten Toleranzzeitdauer und der dritten Toleranzzeitdauer.

Vorzugsweise wird in dem ersten Betriebsschritt B1 oder in dem zweiten Ladeschritt L2, insbesondere in dem ersten zweiten Ladeschritt L2.1, der verschlüsselte, das heißt insbesondere signierte digitale Zeitstempel 21 entschlüsselt. Zusätzlich wird vorzugsweise die Signatur des signierten digitalen Zeitstempels in dem ersten Betriebsschritt B 1 oder in dem zweiten Ladeschritt L2, insbesondere in dem ersten zweiten Ladeschritt L2.1, überprüft. Zusätzlich wird vorzugsweise der Ladestation-Zeitstempel 27 unverschlüsselt an den digitalen Stromzähler übermittelt.

In einem dritten Ladeschritt L3 wird eine Energieübertragung an ein Elektrofahrzeug durchgeführt. Vorzugsweise wird der zweite Ladeschritt L2 zeitlich vor dem dritten Ladeschritt L3 durchgeführt. Alternativ oder zusätzlich wird eine Durchführung des dritten Ladeschritts L3, insbesondere die Energieübertragung, erst freigeschaltet, wenn der zweite Ladeschritt L2 durchgeführt wurde.

In einem vierten Ladeschritt L4 wird ein Ladevorgang-Datensatz 25 unter Verwendung der Zähler-Uhrzeit 23 - insbesondere von dem digitalen Stromzähler 3 - erzeugt.

Vorzugsweise wird der Ladevorgang-Datensatz 25 von dem digitalen Stromzähler 3 digital signiert.

Vorzugsweise umfasst der Ladevorgang-Datensatz 25 mindestens eine Information, die ausgewählt ist aus einer Gruppe, bestehend aus: Der eindeutigen Benutzerkennung 31, einer von der Ladestation 1 abgegebenen, insbesondere an das Elektrofahrzeug übertragenen Energiemenge, einer Startzeit und einer Zeitdauer des Ladevorgangs, der Startzeit und einer Endzeit des Ladevorgangs, einer eindeutigen Stromzählerkennung des digitalen Stromzählers 3, und einer Kombination von wenigstens zwei dieser Informationen. Besonders bevorzugt wird der Ladevorgang-Datensatz 25 als OCMF-Datei erzeugt.

In einem fünften Ladeschritt L5 wird der Ladevorgang beendet.

Vorzugsweise wird in einem optionalen sechsten Ladeschritt L6 der Ladevorgang-Datensatz 25 an das Ladestation-Rechenzentrum 17 übermittelt. Zusätzlich wird besonders bevorzugt der Ladevorgang-Datensatz 25 in dem Ladestation-Rechenzentrum 17 gespeichert.

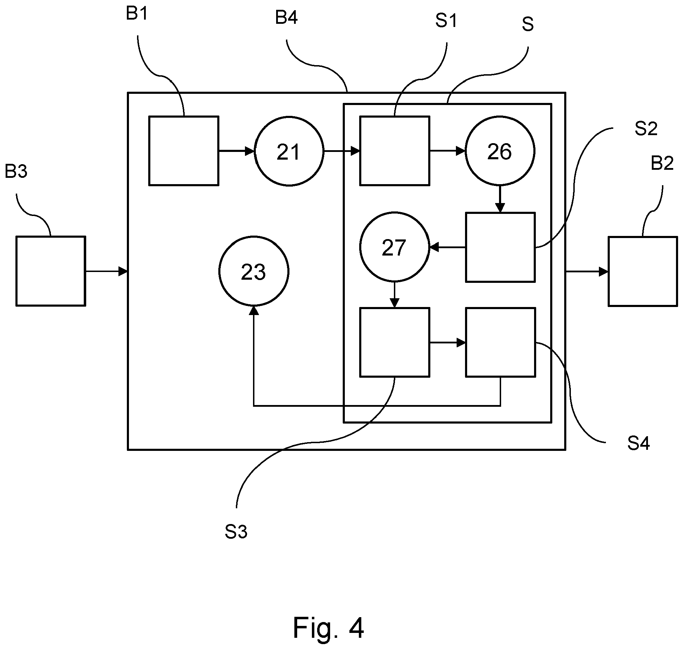

**Figur** 4 zeigt ein Flussdiagramm eines zweiten Ausführungsbeispiels des Verfahrens zum Betreiben der Ladestation 1.

In einem dritten Betriebsschritt B3 wird die Ladestation 1 angeschaltet.

In einem vierten Betriebsschritt B4, insbesondere zeitlich unmittelbar nach dem dritten Betriebsschritt B3, wird ein Startvorgang durchgeführt.

Während des vierten Betriebsschritts B4 wird der erste Betriebsschritt B1 gemäß Figur 3 durchgeführt, und durch die Ladestation 1 wird die momentane Uhrzeit als der digitale Zeitstempel 21 empfangen.

In einem Startschritt S wird basierend auf dem digitalen Zeitstempel 21 die Zähler-Uhrzeit 23 eingestellt.

Vorzugsweise wird in einem ersten Startschritt S1 anhand des digitalen Zeitstempels 21 die Ladestation-Uhrzeit 26 eingestellt, insbesondere indem der digitale Zeitstempel 21 als ein momentaner Wert der Ladestation-Uhrzeit 26 gesetzt wird. Weiter wird in einem zweiten Startschritt S2 anhand der Ladestation-Uhrzeit 26 der Ladestation-Zeitstempel 27 erstellt. Weiterhin wird in einem dritten Startschritt S3 der Ladestation-Zeitstempel 27 an den digitalen Stromzähler 3 übermittelt. Anschließend wird in einem vierten Startschritt S4 die Zähler-Uhrzeit 23 eingestellt, indem der Ladestation-Zeitstempel 27 als ein momentaner Wert der Zähler-Uhrzeit 23 gesetzt wird. Vorzugsweise wird der erste Startschritt S1 spätestens die dritte vorbestimmte Toleranzzeitdauer nach dem ersten Betriebsschritt B 1 durchgeführt. Besonders bevorzugt wird der vierte Startschritt S4 spätestens die zweite vorbestimmte Toleranzzeitdauer nach dem zweiten Startschritt S2 durchgeführt. Insbesondere wird als die zweite vorbestimmte Toleranzzeitdauer und/oder die dritte vorbestimmte Toleranzzeitdauer 5 Sekunden, vorzugsweise 4 Sekunden, vorzugsweise 3 Sekunden, vorzugsweise 2 Sekunden, vorzugsweise 1 Sekunde, besonders bevorzugt 0,5 Sekunden, verwendet.

Insbesondere wird der vierte Startschritt S4 spätestens die erste vorbestimmte Toleranzzeitdauer nach dem ersten Betriebsschritt B1 durchgeführt. Insbesondere wird als die erste vorbestimmte Toleranzzeitdauer 5 Sekunden, vorzugsweise 4 Sekunden, vorzugsweise 3 Sekunden, vorzugsweise 2 Sekunden, vorzugsweise 1 Sekunde, besonders bevorzugt 0,5 Sekunden, verwendet. Insbesondere ist damit die erste Toleranzzeitdauer mindestens so lange wie die Summe aus der zweiten Toleranzzeitdauer und der dritten Toleranzzeitdauer.

Anschließend an den Startschritt S kann der Ladevorgang als der zweite Betriebsschritt B2 gemäß Figur 3 durchgeführt werden.

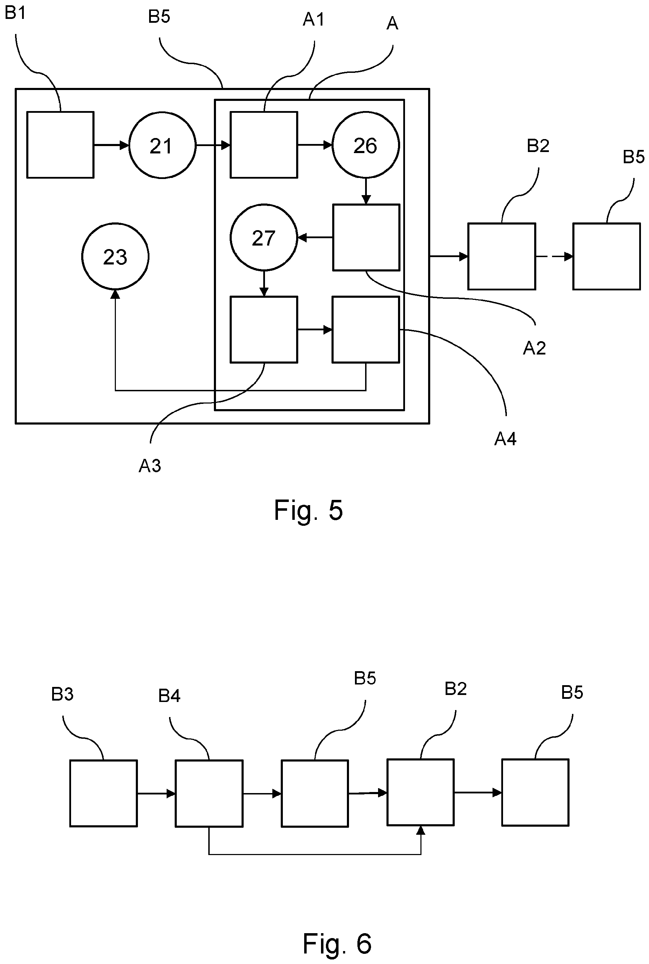

**Figur** 5 zeigt ein Flussdiagramm eines dritten Ausführungsbeispiels des Verfahrens zum Betreiben der Ladestation 1.

In einem fünften Betriebsschritt B5, insbesondere zeitlich vor oder nach dem zweiten Betriebsschritt B2 gemäß Figur 3, wird ein Aktualisierungsvorgang durchgeführt.

Während des fünften Betriebsschritts B5 wird der erste Betriebsschritt B1 gemäß Figur 3 durchgeführt und durch die Ladestation 1 wird die momentane Uhrzeit als der digitale Zeitstempel 21 empfangen.

In einem Aktualisierungsschritt A wird basierend auf dem digitalen Zeitstempel 21 die Zähler-Uhrzeit 23 eingestellt.

Vorzugsweise wird in einem ersten Aktualisierungsschritt A1 anhand des digitalen Zeitstempels 21 die Ladestation-Uhrzeit 26 eingestellt, insbesondere indem der digitale Zeitstempel 21 als ein momentaner Wert der Ladestation-Uhrzeit 26 gesetzt wird. Weiter wird in einem zweiten Aktualisierungsschritt A2 anhand der Ladestation-Uhrzeit 26 der Ladestation-Zeitstempel 27 erstellt. Weiterhin wird in einem dritten Aktualisierungsschritt A3 der Ladestation-Zeitstempel 27 an den digitalen Stromzähler 3 übermittelt. Anschließend wird in einem vierten Aktualisierungsschritt A4 die Zähler-Uhrzeit 23 eingestellt, indem der Ladestation-Zeitstempel 27 als ein momentaner Wert der Zähler-Uhrzeit 23 gesetzt wird. Vorzugsweise wird der erste Aktualisierungsschritt A1 spätestens die dritte vorbestimmte Toleranzzeitdauer nach dem ersten Betriebsschritt B1 durchgeführt. Besonders bevorzugt wird der vierte Aktualisierungsschritt A4 spätestens die zweite vorbestimmte Toleranzzeitdauer nach dem zweiten Aktualisierungsschritt A2 durchgeführt. Insbesondere wird als die zweite vorbestimmte Toleranzzeitdauer und/oder die dritte vorbestimmte Toleranzzeitdauer 5 Sekunden, vorzugsweise 4 Sekunden, vorzugsweise 3 Sekunden, vorzugsweise 2 Sekunden, vorzugsweise 1 Sekunde, besonders bevorzugt 0,5 Sekunden, verwendet.

Insbesondere wird der vierte Aktualisierungsschritt S4 spätestens die erste vorbestimmte Toleranzzeitdauer nach dem ersten Betriebsschritt B1 durchgeführt. Insbesondere wird als die erste vorbestimmte Toleranzzeitdauer 5 Sekunden, vorzugsweise 4 Sekunden, vorzugsweise 3 Sekunden, vorzugsweise 2 Sekunden, vorzugsweise 1 Sekunde, besonders bevorzugt 0,5 Sekunden, verwendet. Insbesondere ist damit die erste Toleranzzeitdauer mindestens so lange wie die Summe aus der zweiten Toleranzzeitdauer und der dritten Toleranzzeitdauer.

Der fünfte Betriebsschritt B5 wird durchgeführt, wenn seit einem vorhergehenden Setzen der Zähler-Uhrzeit 23 mindestens 24 Stunden, vorzugsweise mindestens 12 Stunden, vorzugsweise mindestens 10 Stunden, vorzugsweise mindestens 5 Stunden, vorzugsweise mindestens 2 Stunden, vorzugsweise mindestens 1 Stunde, vergangen sind. Insbesondere wird damit der fünfte Betriebsschritt B5 durchgeführt, wenn seit der letzten Durchführung eines Betriebsschritts, ausgewählt aus dem zweiten Betriebsschritt B2, insbesondere dem zweiten Ladeschritt L2, dem vierten Betriebsschritt B4, insbesondere dem Startschritt S, und dem fünften Betriebsschritt B5, insbesondere dem Aktualisierungsschritt A, mindestens 24 Stunden, vorzugsweise mindestens 12 Stunden, vorzugsweise mindestens 10 Stunden, vorzugsweise mindestens 5 Stunden, vorzugsweise mindestens 2 Stunden, vorzugsweise mindestens 1 Stunde, vergangen sind.

**Figur** 6 zeigt ein Flussdiagramm eines vierten Ausführungsbeispiels des Verfahrens zum Betreiben der Ladestation 1.

Dabei werden zuerst der dritte Betriebsschritt B3 und dann der vierte Betriebsschritt B4 gemäß Figur 4 durchgeführt.

Anschließend an den vierten Betriebsschritt B4 wird optional entweder der fünfte Betriebsschritt B5 gemäß Figur 5 oder der zweite Betriebsschritt B2 gemäß Figur 3 durchgeführt.

Optional wird nach dem zweiten Betriebsschritt B2 der fünfte Betriebsschritt B5 durchgeführt.

Insbesondere wird der fünfte Betriebsschritt B5 durchgeführt, wenn seit der letzten Durchführung eines Betriebsschritts, ausgewählt aus dem zweiten Betriebsschritt B2, insbesondere dem zweiten Ladeschritt L2, dem vierten Betriebsschritt B4, insbesondere dem Startschritt S, und dem fünften Betriebsschritt B5, insbesondere dem Aktualisierungsschritt A, mindestens 24 Stunden, vorzugsweise mindestens 12 Stunden, vorzugsweise mindestens 10 Stunden, vorzugsweise mindestens 5 Stunden, vorzugsweise mindestens 2 Stunden, vorzugsweise mindestens 1 Stunde, vergangen sind.

## Patentansprüche

1. Verfahren zum Betreiben einer einen digitalen Stromzähler (3) aufweisenden Ladestation (1) für Elektrofahrzeuge, wobei durch die Ladestation (1) eine momentane Uhrzeit als ein digitaler Zeitstempel (21) empfangen wird, wobei mittels der Ladestation ein Ladevorgang durchgeführt wird, wobei
- der Ladevorgang initiiert wird, wobei
- nach dem Initiieren des Ladevorgangs basierend auf dem digitalen Zeitstempel (21) eine Zähler-Uhrzeit (23) des digitalen Stromzählers (3) eingestellt wird, wobei
- eine Energieübertragung an ein Elektrofahrzeug durchgeführt wird, wobei
- ein Ladevorgang-Datensatz (25) unter Verwendung der Zähler-Uhrzeit (23) erzeugt wird, wobei
- der Ladevorgang beendet wird.

2. Verfahren nach Anspruch 1, wobei basierend auf dem digitalen Zeitstempel (21) ein Ladestation-Zeitstempel (27) erstellt wird, wobei der Ladestation-Zeitstempel (27) an den digitalen Stromzähler (3) übermittelt wird, wobei die Zähler-Uhrzeit (23) eingestellt wird, indem der Ladestation-Zeitstempel (27) als ein momentaner Wert der Zähler-Uhrzeit (23) gesetzt wird.

3. Verfahren nach einem der vorhergehenden Ansprüche, wobei der Ladevorgang-Datensatz (25) von dem digitalen Stromzähler (3) digital signiert wird.

4. Verfahren nach einem der vorhergehenden Ansprüche, wobei mindestens eine Uhrzeit, ausgewählt aus der Zähler-Uhrzeit (23) und einer Ladestation-Uhrzeit (26), spätestens eine vorbestimmte Toleranzzeitdauer nach dem Empfang der momentanen Uhrzeit als dem digitalen Zeitstempel (21) oder nach dem Erstellen des Ladestation-Zeitstempels (27) eingestellt wird.

5. Verfahren nach einem der vorhergehenden Ansprüche, wobei als die vorbestimmte Toleranzzeitdauer 5 Sekunden, vorzugsweise 4 Sekunden, vorzugsweise 3 Sekunden, vorzugsweise 2 Sekunden, vorzugsweise 1 Sekunde, besonders bevorzugt 0,5 Sekunden, verwendet wird.

6. Verfahren nach einem der vorhergehenden Ansprüche, wobei basierend auf dem digitalen Zeitstempel die Zähler-Uhrzeit des digitalen Stromzählers eingestellt wird, bevor die Energieübertragung gestartet wird, und/oder wobei die Energieübertragung erst freigeschaltet wird, wenn basierend auf dem digitalen Zeitstempel (21) die Zähler-Uhrzeit (23) eingestellt wurde.

7. Verfahren nach einem der vorhergehenden Ansprüche, wobei, während des Initiierens des Ladevorgangs ein Benutzer der Ladestation (1) erkannt wird, wobei eine eindeutige Benutzerkennung (31) erfasst wird, wobei die eindeutige Benutzerkennung (31) an den digitalen Stromzähler (3) übermittelt wird.

8. Verfahren nach einem der vorhergehenden Ansprüche, wobei, während des Initiierens des Ladevorgangs, insbesondere bevor der Benutzer der Ladestation (1) erkannt wird, ein Ladepunkt (5) der Ladestation (1) ausgewählt wird, insbesondere von dem Benutzer, insbesondere mittels einer Bedienvorrichtung (9).

9. Verfahren nach einem der vorhergehenden Ansprüche, wobei, während des Initiierens des Ladevorgangs, insbesondere bevor der Benutzer der Ladestation (1) erkannt wird, eine Bezahlart (29) ausgewählt wird, insbesondere von einem Benutzer, insbesondere mittels einer Bedienvorrichtung (9).

10. Verfahren nach einem der vorhergehenden Ansprüche, wobei, während des Initiierens des Ladevorgangs, der Benutzer der Ladestation (1) anhand
a) eines RFID-Chips, und/oder
b) einer Kreditkarte, und/oder
c) eines Smartphones, und/oder
d) einer Ladekarte, und/oder
e) einer digitalen Leistungsempfängerkennung
erkannt wird.

11. Verfahren nach einem der vorhergehenden Ansprüche, wobei, während des Initiierens des Ladevorgangs, die eindeutige Benutzerkennung (31) an ein Ladestation-Rechenzentrum (17) übermittelt wird, wobei das Ladestation-Rechenzentrum (17) basierend auf der eindeutigen Benutzerkennung (31) die Energieübertragung an der Ladestation (1) freigibt.

12. Verfahren nach einem der vorhergehenden Ansprüche, wobei der Ladevorgang-Datensatz (25) mindestens eine Information umfasst, die ausgewählt ist aus einer Gruppe, bestehend aus: Der eindeutigen Benutzerkennung (31), einer von der Ladestation abgegebenen, insbesondere an das Elektrofahrzeug übertragenen Energiemenge, einer Startzeit und einer Zeitdauer des Ladevorgangs, der Startzeit und einer Endzeit des Ladevorgangs, einer eindeutigen Stromzählerkennung des digitalen Stromzählers (3), und einer Kombination von wenigstens zwei dieser Informationen, wobei vorzugsweise der Ladevorgang-Datensatz (25) als OCMF-Datei erzeugt wird.

13. Verfahren nach einem der vorhergehenden Ansprüche, wobei der Ladevorgang-Datensatz (25) an das Ladestation-Rechenzentrum (17) übermittelt wird, und wobei insbesondere der Ladevorgang-Datensatz (25) in dem Ladestation-Rechenzentrum (17) gespeichert wird.

14. Verfahren nach einem der vorhergehenden Ansprüche, wobei
- unmittelbar nach einem Anschalten der Ladestation (1) ein Startvorgang durchgeführt wird, wobei
- während des Startvorgangs durch die Ladestation (1) die momentane Uhrzeit als der digitale Zeitstempel (21) empfangen wird, wobei
- basierend auf dem digitalen Zeitstempel (21) die Zähler-Uhrzeit (23) eingestellt wird, wobei
- vorzugsweise basierend auf dem digitalen Zeitstempel (21) der Ladestation-Zeitstempel (27) erstellt wird, wobei der Ladestation-Zeitstempel (27) an den digitalen Stromzähler (3) übermittelt wird, wobei die Zähler-Uhrzeit (23) eingestellt wird, indem der Ladestation-Zeitstempel (27) als ein momentaner Wert der Zähler-Uhrzeit (23) gesetzt wird.

15. Verfahren nach einem der vorhergehenden Ansprüche, wobei
- ein Aktualisierungsvorgang durchgeführt wird, wenn seit einem vorhergehenden Einstellen der Zähler-Uhrzeit (23) mindestens 24 Stunden, vorzugsweise mindestens 12 Stunden, vorzugsweise mindestens 10 Stunden, vorzugsweise mindestens 5 Stunden, vorzugsweise mindestens 2 Stunden, vorzugsweise mindestens 1 Stunde, vergangen sind, wobei
- während des Aktualisierungsvorgangs durch die Ladestation (1) die momentane Uhrzeit als der digitale Zeitstempel (21) empfangen wird, wobei
- basierend auf dem digitalen Zeitstempel (21) die Zähler-Uhrzeit (23) eingestellt wird, wobei
- vorzugsweise basieren auf dem digitalen Zeitstempel (21) der Ladestation-Zeitstempel (27) erstellt wird, wobei der Ladestation-Zeitstempel (27) an den digitalen Stromzähler (3) übermittelt wird, wobei die Zähler-Uhrzeit (23) eingestellt wird, indem der Ladestation-Zeitstempel (27) als ein momentaner Wert der Zähler-Uhrzeit (23) gesetzt wird.

16. Ladestation (1) mit einem digitalen Stromzähler (3), wobei die Ladestation (1) eingerichtet ist, um gemäß einem Verfahren nach einem der vorhergehenden Ansprüche betrieben zu werden.
